(19) Europäisches Patentamt
European Patent Office
Office européen des brevets

(11) **EP 2 868 417 B1**

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(21) Anmeldenummer: **14186498.3**

(22) Anmeldetag: **26.09.2014**

(51) Int Cl.:
*B23H 3/02* (2006.01)     *B23H 7/20* (2006.01)

(54) **Identifizierung und Regelung des Anlaufverhaltens bei einer elektrochemischen Bearbeitung von Werkstücken**

Identification and regulation of the starting behaviour in electrochemical processing of workpieces

Identification et réglage du comportement au démarrage lors d'un traitement électrochimique de pièces à usiner

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **30.10.2013 DE 102013222083**

(43) Veröffentlichungstag der Anmeldung:
**06.05.2015 Patentblatt 2015/19**

(73) Patentinhaber: **MTU Aero Engines AG**
**80995 München (DE)**

(72) Erfinder:
• **Ruhlig, Dirk**
**59439 Holzwickede (DE)**
• **Boxhammer, Markus**
**80538 München (DE)**

(56) Entgegenhaltungen:
WO-A1-03/099499     DE-A1-102006 027 033
US-A1- 2002 169 516     US-A1- 2003 010 650

**Beschreibung**

HINTERGRUND DER ERFINDUNG

GEBIET DER ERFINDUNG

Die vorliegende Erfindung betrifft ein Verfahren zur elektrochemischen Bearbeitung von Werkstücken nach dem Oberbegriff des Anspruchs 1.

STAND DER TECHNIK

Die elektrochemische Bearbeitung (electrochemical machining ECM) ist ein formgebendes Bearbeitungsverfahren zur Bearbeitung von Werkstücken, welches sowohl bei der Herstellung von komplexen Oberflachenformen und/oder schwer zu bearbeitenden Werkstoffen in vorteilhafter Weise eingesetzt werden kann. Das Verfahren bedient sich der anodischen Oxidation des zu bearbeitenden Werkstoffs, wobei eine Arbeitselektrode mit Abstand zur zu bearbeitenden Oberfläche angeordnet wird und ein Elektrolyt im Spalt zwischen der zu bearbeitenden Oberfläche und der Elektrode vorgesehen wird, so dass durch Anlegen eines elektrischen Potentials zwischen Elektrode und zu bearbeitendem Werkstück das Material des Werkstücks durch anodische Oxidation aufgelöst wird und in den Elektrolyten übergeht. Dadurch ergibt sich ein Materialabtrag, der von den Potentialverhältnissen im Bearbeitungsspalt abhängt. Diese werden wieder durch die Spaltbreite beeinflusst, so dass eine dreidimensionale Form der Arbeitselektrode mit entsprechend unterschiedlichen Abständen der Arbeitselektrode zur zu bearbeitenden Oberfläche zu einem formabhängigen Abtrag führt. Damit lasst sich die Form der Arbeitselektrode bei der bearbeiteten Oberfläche aufprägen bzw. abbilden.

Das elektrochemische Abtragen kann nicht nur kontinuierlich, sondern auch in gepulster Form durchgeführt werden, wobei kein kontinuierlicher Stromfluss eingestellt wird, sondern eine Vielzahl von Strompulsen hintereinander ausgeführt werden. Ein derartiges Verfahren wird auch als PECM (pulsed electrochemical machining) bezeichnet.

Bei der Bearbeitung von Werkstücken aus bestimmten Materialien, wie beispielsweise Werkstücken aus Titanaluminiden, kommt es bei der elektrochemischen Bearbeitung zu einem sogenannten Anlaufverhalten, das dadurch gekennzeichnet ist, dass sich während der ersten Zeit des Abtragprozesses die über dem Bearbeitungsspalt gemessenen Potential- und Stromwerte verandern. Dies kann dazu führen, dass die Bearbeitungsparameter für die elektrochemische Bearbeitung fehlerhaft eingestellt werden. Beispielsweise könnte sich dadurch eine falschen Einstellung der Spaltbreite, also des Abstands zwischen der zu bearbeitenden Oberfläche und der Elektrodenoberfläche ergeben, was durch die entsprechenden Auswirkungen auf die Potentialverteilung im Arbeitsspalt und damit auf das Abtragverhaltens des Materials zu schlechten Bearbeitungsergebnissen führen könnte.

Entsprechend wurden bereits in der WO 0311799498 A1 und der WO 03/099499 A1 Verfahren beschrieben, wie die tatsächliche Spaltbreite zwischen Arbeitselektrode und zu bearbeitender Oberfläche bestimmt werden kann, um die richtige Einstellung der Spaltbreite zu erzielen. Allerdings beschäftigen sich diese Dokumente nicht mit der Frage, wie eine entsprechend Anlaufphase bei der elektrochemischen Bearbeitung erkannt werden kann und welche Maßnahmen zur Erzielung einer optimalen elektrochemischen Bearbeitung im Falle einer Anlaufphase oder einer vergleichbaren instationären Phase getroffen werden können, um eine optimale elektrochemische Bearbeitung zu gewährleisten.

Aus der US 2002/169516 A1 ist ein Verfahren zur elektrochemischen Bearbeitung von Werkstücken bekannt, bei welchem mindestens eine Elektrode benachbart zu einer zu bearbeitenden Oberfläche angeordnet wird und in einem gepulsten Betrieb Strompulse erzeugt werden, um Material von dem Werkstück abzutragen. Während es elektrochemischen Abtrags werden daten der Strompulse erfasst und ausgewertet, um eine Anlaufphase oder eine einer Anlaufphase vergleichbare instationäre Phase zu identifizieren oder während einer Anlaufphase oder einer einer Anlaufphase vergleichbaren instationären Phase den Abstand der Elektrode zu der zu bearbeitenden Oberfläche oder den Stromfluss zu regeln. Die Gewährleistung einer optimalen elektrochemischen Bearbeitung kann trotzdem nicht ganz sicher gestellt werden.

OFFENBARUNG DER ERFINDUNG

AUFGABE DER ERFINDUNG

Es ist somit Aufgabe der vorliegenden Erfindung, ein Verfahren zur elektrochemischen Bearbeitung von Werkstücke bereitzustellen, bei welchem das Vorliegen einer Anlaufphase bei der elektrochemischen Bearbeitung oder einer mit einer Anlaufphase vergleichbaren instationären Phase des Bearbeitungsprozesses erkannt werden kann und bei welchem eine optimale elektrochemische Bearbeitung auch während einer Anlaufphase oder einer vergleichbaren instationären Phase realisiert werden kann. Gleichzeitig soll das entsprechende Verfahren jedoch einfach und zuverlässig durchführbar sein.

TECHNISCHE LÖSUNG

Diese Aufgabe wird gelöst durch ein Verfahren mit den Merkmalen des Anspruchs 1. Vorteilhafte Ausgestaltungen sind Gegenstand der abhängigen Ansprüche.

Die vorliegende Erfindung schlägt vor, zur Identifizierung einer Anlaufphase oder einer mit einer Anlaufphase vergleichbaren instationären Phase, vor und/oder zu Beginn und/oder während des elektrochemischen Abtrags Daten der Strompulse zu erfassen und auszuwerten und/oder während einer Anlaufphase oder einer mit einer Anlaufphase vergleichbaren instationären Phase den Abstand der Elektrode zu der zu bearbeitenden Oberfläche und/oder den Stromfluss zu regeln.

Durch die Identifizierung einer Anlaufphase oder einer mit einer Anlaufphase vergleichbaren instationären Phase kann sichergestellt werden, dass die Parameter der elektrochemischen Bearbeitung entsprechend angepasst werden können, um möglichst jederzeit eine optimale elektrochemische Bearbeitung zu realisieren. Durch die Regelung des Elektrodenabstands zu der zu bearbeitenden Oberfläche und/oder des Stromflusses während der Anlaufphase oder während einer einer Anlaufphase vergleichbaren instationären Phase kann das Erreichen oder Wieder - Erreichen einer stationären Phase beschleunigt werden, da durch die Regelung des elektochmischen Prozesses eine möglichst weitgehende Konstanz des Bearbeitungsprozesses erzielt werden kann.

Als Anlaufphase oder als eine mit einer Anlaufphase vergleichbaren instationären Phase kann jede Phase des elektrochemischen Abtragens identifiziert werden, in der die Abtragrate nicht konstant ist. Insbesondere können sich während einer derartigen Anlaufphase oder instationären Phase die maximale oder durchschnittliche Stromstärke pro Puls über einer Reihe aufeinanderfolgender Pulse verändern, insbesondere ansteigen, oder die maximale durchschnittliche Spannung pro Puls, die über dem Spalt abfällt, kann bei einer Reihe aufeinanderfolgender Pulse abnehmen. Entsprechend können zur Identifizierung einer Anlaufphase oder einer vergleichbaren instationären Phase entsprechende Messwerte aufgenommen, gespeichert und ausgewertet werden.

Eine Möglichkeit besteht darin, die Stromstärke eines Strompulses, insbesondere jeden Strompulses, zu ermitteln. Der Stromwert eines Strompulses kann zu einem vorbestimmten Zeitpunkt des Strompulses ermittelt werden, beispielsweise in einem Zeitintervall in der Mitte des Strompulses.

Die erfassten Daten der Strompulse, wie insbesondere die Stromstärken der Strompulse, werden erfingdungsgemäß zur Ermittlung materialspezifischer und/oder systemspezifischer Parameter des Bearbeitungsprozesses verwendet, wie beispielsweise zur Ermittlung des elektrischen Gesamtwiderstands des Systems ohne den Spaltwiderstand und den Grenzflächenwiderstand zwischen Elektrolyt und Elektrode und/oder zur Ermittlung der für eine Materialauflösung notwendigen Überspannung und/oder zur Ermittlung der Leitfähigkeit des Elektrolyten im konkreten Anwendungsfall eines Bearbeitungsspalts einer elektrochemischen Bearbeitungsmaschine. Durch Ermitteln der materialspezifischen und/oder systemspezifischen Parameter, die sich während der Anlaufphasen oder sonstigen vergleichbaren instationären Phasen verändern können, können diese zudem mit Hilfe der ermittelten Daten der Strompulse angepasst werden, sodass eine optimale Einstellung der Parameter zur elektrochemischen Bearbeitung möglich ist.

Gleichzeitig kann mit Hilfe der ermittelten materialspezifischen und/oder systemspezifischen Parameter einer Regelung des elektrochemischen Abtrags auch während einer instationären Phase oder einer Anlaufphase erfolgen, beispielsweise indem der Abstand der Elektrode zur zu bearbeitenden Oberfläche und/oder der Stromfluss geregelt werden.

Die Regelung des Abstands der Elektrode zur zu bearbeitenden Oberfläche wird erfingdungsgemäß durch Einstellung des Vorschubs der Elektrode in Richtung der zu bearbeitenden Oberfläche erfolgen und die Regelung des Stromflusses kann durch Einstellung des angelegten Potentials bewirkt werden. Allerdings können diese Stellgrößen für die Regelung im Rahmen einer Linearisierung und Entkopplung der Stellgrößen durch virtuelle Stellgrößen ersetzt werden, wobei sich die Stellgröße des angelegten Potentials U ergibt durch:

$$U = v_2(R + \frac{x}{\kappa A}) + \Delta U,$$

wobei R der Gesamtwiderstand des Systems ohne den Spaltwiderstand und den Grenzflächenwiderstand zwischen Elektrolyt und Elektrode, x der Abstand der Elektrode von der zu bearbeitenden Oberfläche, $\kappa$ die elektrische Leitfähigkeit, A die Arbeitsfläche der Elektrode und $\Delta U$ die Überspannung ist. $v_1$ und $v_2$ sind virtuelle Stellgrößen, wobei sich der Vorschub V ergibt zu:

$$V = \kappa v_2 - v_1.$$

Bei der Regelung kann ein Proportional - Integral(PI) - Regler und/oder ein Kalman - Filter eingesetzt werden, um möglichst Fehler bei der Messwertermittlung im Regelkreis zu minimieren. Um einen geschlossenen Regelkreis zu erhalten, werden Messergebnisse für die Regelgrößen Strom und Spaltbreite an den Regler rückgekoppelt, wobei die Messergebnisse durch den Kaiman - Filter aufbereitet werden. Dies ist insbesondere für die Bestimmung der Spaltbreite zwischen Elektrode und Arbeitsoberflache vorteilhaft, die durch einen Beobachter abgeschätzt werden kann. Die Anwendung eines sogenannten Kalman - Filters führt hier zu einer Minimierung der Schatzfehler. Darüber hinaus kann der Kalman - Filter auch den gemessenen Stromwert für die Rückkopplung des Regelkreises von entsprechenden Messfehlern bereinigen, um dadurch ein besseres Regelungsergebnis zu erzielen.

## KURZBESCHREIBUNG DER FIGUREN

Die beigefügten Figuren zeigen in rein schematischer Ansicht in

Fig.1 in den Teilbildern a) bis c) ein Strom-Zeit-Diagramm a) sowie ein Spannungs-Zeit-Diagramm c) sowie eine Darstellung der Veränderung von Strom und Spannung über die Anzahl der Pulse b);

Fig.2 ein Strom-Zeit-Diagramm zweier Strompulse bei unterschiedlichen Drücken (6 bar und 3 bar) sowie die Darstellung des Messfensters für die Stromstärke;

Fig.3 ein Strom - Spannungs - Diagramm für eine Vielzahl von Strommessungen von Strompulsen gemäß Figur 2 bei unterschiedlichen Abständen der Elektrode von der zu bearbeitenden Oberfläche und unterschiedlich angelegten Spannungen;

Fig.4 eine Darstellung des Regelkreises gemäß der vorliegenden Erfindung;

Fig.5 eine Darstellung der bei der Regelung realisierten Linearisierung der Stellgrößen;

Fig.6 eine Teildarstellung der Linearisierung und Entkopplung der Stellgrößen gemäß der Erfindung; und in

Fig.7 eine Darstellung zur Verwendung des Kalman - Filters im Regelkreis.

## AUSFÜHRUNGSBEISPIELE

Weitere Vorteile, Kennzeichen und Merkmale der vorliegenden Erfindung werden bei der nachfolgenden detaillierten Beschreibung eines Ausführungsbeispiels deutlich. Allerdings ist die Erfindung nicht auf dieses Ausführungsbeispiel beschränkt.

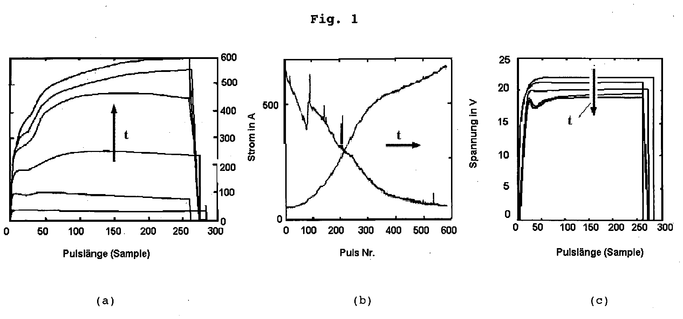

Die Figur 1 zeigt in den Teilbildern a) bis c) eine typische Situation des Anlaufverhaltens am Prozessbeginn bzw. eines instationären Verhaltens von Strom und Spannung bei einer elektrochemischen Bearbeitung. In Teilbild a) der Figur 1 ist der Strom über der Pulslänge aufgetragen und es sind verschiedene Strompulse dargestellt, die mit fortschreitender Zeit zu Beginn einer elektrochemischen Bearbeitung auftreten. Dies ist mit dem Pfeil und dem kleinen Buchstaben t dargestellt, welcher andeutet, dass die dargestellten Strompulse mit höherer Pulszahl bzw. fortschreitender Zeit einen höheren Stromwert aufweisen. In ähnlicher Weise ist in Figur 1c) die Spannung über die die Pulslänge und ebenfalls der Spannungsverlauf mehrerer Pulse dargestellt, wobei zu erkennen ist, dass mit zunehmender Bearbeitungsdauer t bzw. höherer Anzahl der Pulse der maximale Spannungsabfall der Pulse abnimmt.

In Figur 1b) ist der Verlauf von Strom und Spannung über der Anzahl der Pulse dargestellt. Dabei ist zu erkennen, dass die Spannungsabfälle der Pulse mit zunehmender Zeit bzw. höherer Pulszahl abnehmen, während der maximale bzw. durchschnittliche Strom pro Puls mit zunehmender Anzahl der Pulse zunimmt. Diese Tendenz wird erst gestoppt, wenn sich bei der elektrochemischen Bearbeitung ein stationärer Zustand eingestellt hat, bei dem die Abtragsrate ein konstantes Niveau erreicht hat.

Allerdings können die in der Anlaufphase oder einer vergleichbaren instationären Phase veränderlichen Abtragsbedingungen zur falschen Einstellung von Abtragsparametern führen, sodass durch die Identifizierung entsprechender Anlaufphasen oder vergleichbarer instationären Bedingungen eine entsprechende Veränderung der Bearbeitungsparameter vorgenommen werden kann.

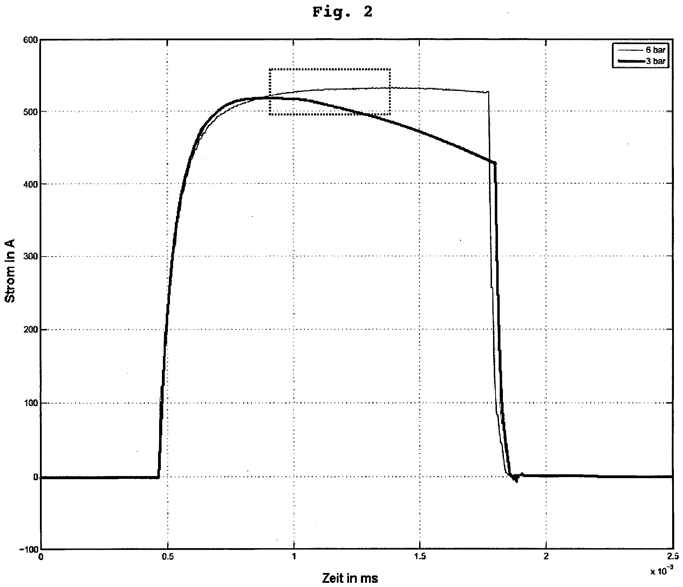

Um entsprechend der Darstellung der Figur 1 instationären Phasen bzw. Anlaufphasen identifizieren zu können, wird von jedem Strompuls ein Stromwert ermittelt, wie dies in Figur 2 dargestellt ist. Die Figur 2 zeigt zwei Strompulse in einem Strom-Zeit-Diagramm, und zwar für unterschiedliche Druckbedingungen im Elektrolytspalt zwischen Elektrode und zu bearbeitender Oberfläche. Wie in Figur 2 dargestellt, wird ein bestimmtes Messfenster definiert, in welchem der Stromwert des Strompulses ermittelt wird. Im vorliegenden Fall wird der Stromwert in einem mittleren Zeitintervall des Strompulses ermittelt.

Der so ermittelte Stromwert wird einerseits für die Identifzierung einer instationären Phase bzw. einer Anlaufphase verwendet und andererseits dienen entsprechende Stromwertmessungen zur Bestimmung von materialspezifischen und systemspezifischen Größen, wie dem Gesamtwiderstand des Systems, der Überspannung und der Leitfähigkeit. Der Gesamtwiderstand ergibt sich hierbei aus dem Leitungswiderstand und der Induktivität der elektrischen Anordnung für die elektrochemische Bearbeitung. Die zusätzlich auftretenden Widerstände bezüglich des Arbeitsspalts zwischen Elektrode und zu bearbeitender Oberfläche sowie der Elektroden - Elektrolyt - Grenzfläche werden hierbei jedoch nicht berücksichtigt.

Die Überspannung ist ein Maß für die Spannung, die als Grenzspannung überwunden werden muss, damit ein elektrochemischer Abtrag beginnt, während die Leitfähigkeit eine materialspezifische Größe des verwendeten Elektrolyten ist. Gemäß der Erfindung werden diese Parameter für die Regelung während der Anlaufphase oder einer vergleichbaren instationären Phase verwendet, wobei die entsprechenden Parameter nach Erreichen eines stationären Zustands unter Umständen neu zu bestimmen sind, da sich diese nach Einstellung des stationären Zustands verändert haben könnten.

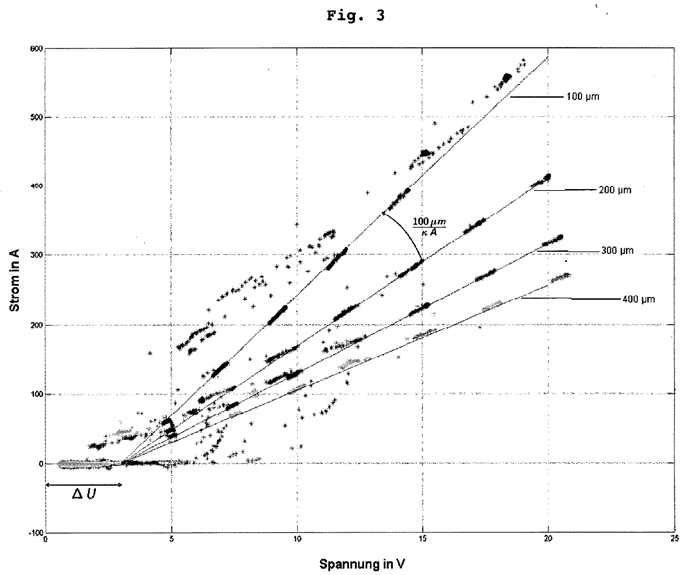

Die Darstellung der Figur 3 zeigt die Auftragung der gemessenen Stromwerte einer Vielzahl von Strompulsen über der Spannung, wobei die verschiedenen Stromwerte für verschiedene Spaltdicken im Bereich zwischen 100 μm und 400 μm und bei verschieden angelegten Spannungen ermittelt worden sind.

Aus der Figur 3 lässt sich unmittelbar aus den Stromwerten, die für unterschiedliche Spaltbreiten bei unterschiedlich angelegten Spannungen gemessen worden sind und die entlang von Geraden angeordnet sind, die Überspannung ΔU bestimmen, die durch den Schnittpunkt der Strom - Spannungs - Kurve für jede Spaltbreite mit der Abszissenachse gegeben ist.

Darüber hinaus verdeutlicht das Diagramm der Figur 3, dass die verschiedenen ermittelten Stromwerte der Strompulse zusätzlich für die Bestimmung der weiteren materialspezifischen und systemspezifischen Größen Verwendung finden kann, da die unterschiedlichen Steigungen der Strom - Spannungs - Kurven für die unterschiedlichen Spaltbreiten zwischen Elektrode und zu bearbeitender Oberfläche einem Quotienten aus der Differenz der Spaltbreite und dem Produkt aus Fläche der Arbeitselektrode und Leitfähigkeit entsprechen, während die Steigungen der Strom - Spannungs - Kurven den Summen aus Gesamtwiderstand der elektrischen Anordnung und dem Spaltwiderstand sowie dem Grenzflächenwiderstand zwischen Elektrode und Elektrolyt entspricht. Folglich lässt sich mathematisch aus den in Figur 3 visualisiert dargestellten Messwerten die entsprechenden materialspezifischen und systemspezifischen Größen bestimmen. Dies kann im Rahmen von Vorversuchen vor der eigentlichen Bearbeitung, zu Beginn der Bearbeitung oder während der Bearbeitung erfolgen.

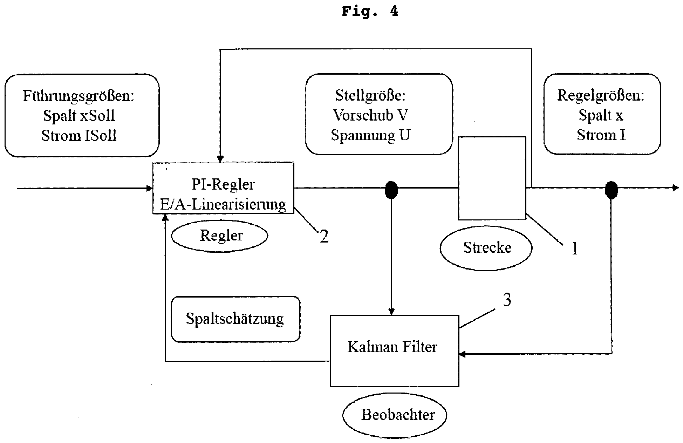

Die Figur 4 zeigt das Schema eines Regelkreises für eine elektrochemische Bearbeitung, wobei die Maschine 1 zur elektrochemischen Bearbeitung regelungstechnisch als Strecke bezeichnet werden kann. Als Regelgrößen soll die Spaltbreite, also der Abstand der Elektrode zur zu bearbeitenden Oberfläche, und der Stromfluss als Maß des Materialabtrags geregelt werden. Entsprechend werden auch als Führungsgrößen die gewünschte Spaltbreite und der gewünschte Strom an einem Regler 2 eingestellt, der im vorliegenden Fall als Proportional - Integral - Regler ausgebildet ist. Zusätzlich ist eine sogenannte Ein -/Ausgabe - Linearisierung verwirklicht, auf die nachfolgend noch detailliert eingegangen wird. Als Stellgrößen werden bei der Maschine 1 zur elektrochemischen Bearbeitung der Vorschub V der Elektrode in Richtung der zu bearbeitenden Oberfläche und die an die Elektrode angelegte Spannung U verwendet.

Des Weiteren findet ein Kaiman - Filter 3 Verwendung, in den die Stellgrößen, als auch die durch Messung erfassten tatsächlichen Regelgrößen als Eingangsgrößen eingegeben werden, um die bei der Erfassung der tatsächlichen Werte der Regelgrößen auftretenden Fehler möglichst zu minimieren. Neben der Messung des tatsächlichen Stromwerts wird die Spaltbreite durch Beobachtung abgeschätzt und dem Regler 2 zur Verfügung gestellt.

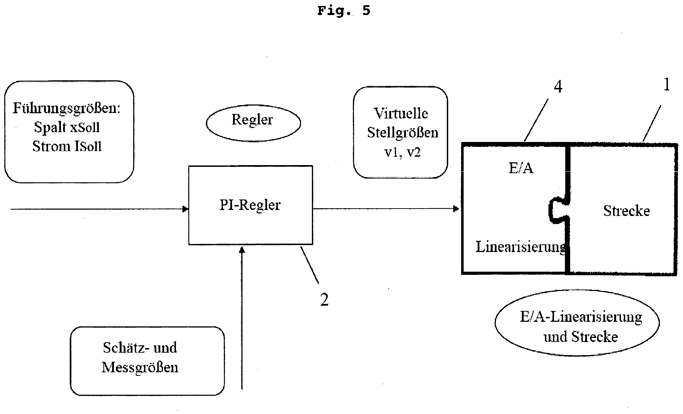

Die Figur 5 zeigt in einem Detail das Zusammenwirken des PI - Reglers 2 mit der Strecke 1 im Zusammenwirken mit einer Eingabe/Ausgabe - Linearisierung 4.

Der PI - Regler 2, der als Eingangsgrößen die Schätz- und Messgrößen bezüglich der Spaltbreite und des Stromwerts sowie als Führungsgrößen die Einstellung der gewünschten Spaltbreite und des Stroms erhält, gibt lediglich virtuelle Stellgrößen $v_1$, $v_2$ aus, die eine Linearisierung eines nicht-linearen Systems ermöglichen, um ein entkoppeltes, lineares System zu erzeugen.

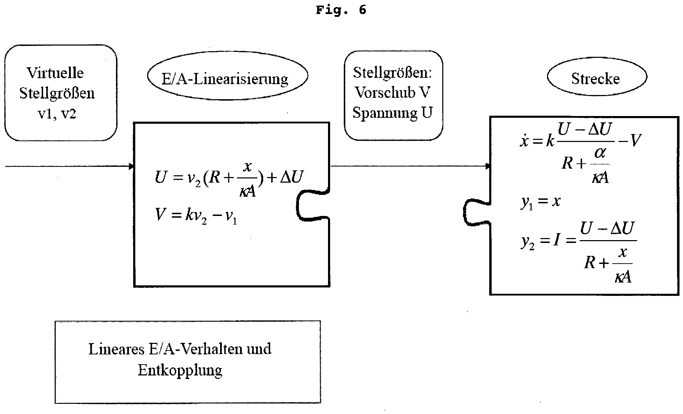

Der Linearisierung liegen die in Figur 6 wiedergegebenen Zusammenhänge zwischen dem angelegten Potential U und dem Vorschub V zugrunde.

$$U = v_2(R + \frac{x}{\kappa A}) + \Delta U,$$

wobei $v_2$ eine virtuelle Stellgröße ist, R der Gesamtwiderstand der elektrochemischen Systems ohne den Widerstand durch den Bearbeitungsspalt und die Elektrolyt - Elektroden - Grenzfläche, x die Spaltbreite, κ die elektrische Leitfähigkeit, A die Größe der Bearbeitungsfläche an der Elektrode und ΔU die Überspannung.

Der Vorschub V bestimmt sich zu:

$$V = \kappa v_2 - v_1,$$

wobei $v_1$ ebenfalls eine virtuelle Stellgröße ist

Damit lassen sich die realen Stellgrößen Vorschub V und angelegtes Potential U in einfacher Weise einstellen, um die Regelgrößen $y_1$ = Spaltbreite x und $y_2$ = Stromstärke I in der gewünschten Größe zu erhalten.

Damit ergibt sich in der Regelstrecke, also der elektrochemischen Bearbeitungsmaschine 1 die zeitliche Veränderung der Spaltbreite zu:

$$\dot{x} = \kappa \frac{U - \Delta U}{R + \frac{x}{\kappa A}} - V$$

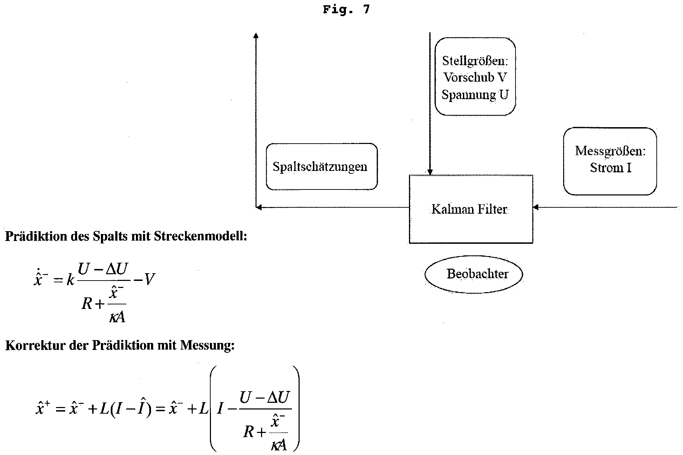

Die Figur 7 zeigt die Wirkungsweise des Kaiman - Filters 3 aus Figur 4, der sowohl die Stellgrößen Vorschub V und Spannung U, als auch den gemessenen Stromwert I als Eingangsgrößen aufweist. Zudem wird die Eingabe des Beobachters bezüglich des Abstands der Elektrode von der Arbeitsfläche (Spaltbreite) bereitgestellt, sodass durch den Kalman - Filter bereinigte Werte sowohl bezüglich der Spaltabschätzung als auch des gemessenen Stroms an den PI - Regler 2 abgegeben werden.

Damit ergibt sich insgesamt ein Verfahren, bei welchen einerseits Anlaufphasen bzw. damit vergleichbare instationäre Phasen identifizierbar sind und andererseits die Möglichkeit der Regelung der elektrochemischen Bearbeitungsmaschine auch in einer Anlaufphase oder einer damit vergleichbaren instationären Phase gegeben ist. Darüber hinaus können materialspezifische und systemspezifische Größen für den Betrieb und die Regelung der elektrochemischen Bearbeitungsanlage 1 bestimmt und entsprechend angepasst werden, um eine optimale elektrochemische Bearbeitung zu gewährleisten. Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird.

**Patentansprüche**

1. Verfahren zur elektrochemischen Bearbeitung von Werkstücken, bei welchem mindestens eine Elektrode benachbart zu einer zu bearbeitenden Oberfläche angeordnet wird und in einem gepulsten Betrieb Strompulse erzeugt werden, um Material von dem Werkstück abzutragen, wobei

   - vor und/oder zu Beginn und/oder während des elektrochemischen Abtrags Daten der Strompulse erfasst und ausgewertet werden, um eine Anlaufphase oder eine einer Anlaufphase vergleichbare instationäre Phase zu identifizieren und/oder während einer Anlaufphase oder einer einer Anlaufphase vergleichbaren instationären Phase den Abstand der Elektrode zu der zu bearbeitenden Oberfläche und/oder den Stromfluss zu regeln, **dadurch gekennzeichnet, dass**
   - die als Anlaufphase oder die einer Anlaufphase vergleichbare instationäre Phase dadurch identifiziert wird, dass die maximale oder durchschnittliche Stromstärke pro Puls über eine Reihe aufeinander folgender Pulse ansteigt oder die maximale oder durchschnittliche Spannung pro Puls über eine Reihe aufeinander folgender Pulse abfällt,
   wobei
   - die Regelung eine Linearisierung und Entkopplung der Stellgrößen umfasst, wobei das angelegte Potential U bestimmt wird durch

$$U = v_2\left(R + \frac{x}{\kappa A}\right) + \Delta U,$$

   und/oder
   der Vorschub V durch

$$V = \kappa v_2 - v_1,$$

   wobei R der Gesamtwiderstand des Systems, x der Abstand der Elektrode von der zu bearbeitenden Oberfläche, $\kappa$ die elektrische Leitfähigkeit, A die Arbeitsfläche der Elektrode, $\Delta U$ die Überspannung und $v_1$ und $v_2$ virtuelle Stellgrößen sind, wobei $v_1$ der Regelgröße des Abstands der Elektrode von der zu bearbeitenden Oberfläche und $v_2$ der Regelgröße der Stromstärke entspricht.

2. Verfahren nach Anspruch 1,
   **dadurch gekennzeichnet, dass**
   als Anlaufphase oder einer Anlaufphase vergleichbare instationäre Phase dadurch identifiziert wird, dass die Abtragsrate nicht konstant ist.

3. Verfahren nach Anspruch 1 oder 2,
   **dadurch gekennzeichnet, dass**
   die Stromstärke eines Strompulses, insbesondere jedes Strompulses ermittelt wird, und zwar zu einem vorbestimmten Zeitpunkt des Strompulses, insbesondere in einem Zeitintervall in der Mitte des Strompulses.

4. Verfahren nach Anspruch 3,
   **dadurch gekennzeichnet, dass**
   die Stromstärken der Strompulse bei unterschiedlich angelegten Spannungen ermittelt werden.

5. Verfahren nach einem der vorhergehenden Ansprüche,
   **dadurch gekennzeichnet, dass**
   aus den erfassten Daten der Strompulse materialspezifische und/oder systemspezifische Parameter ermittelt werden.

6. Verfahren nach einem der vorhergehenden Ansprüche,
   **dadurch gekennzeichnet, dass**
   die materialspezifischen und/oder systemspezifischen Parameter den elektrischen Gesamtwiderstand des Systems, die Überspannung und/oder die Leitfähigkeit umfassen.

7. Verfahren nach einem der vorhergehenden Ansprüche,
   **dadurch gekennzeichnet, dass**
   die Regelung des Abstands der Elektrode zur zu bearbeitenden Oberfläche und/oder des Stromflusses durch Einstellung des Vorschubs der Elektrode in Richtung der zu bearbeitenden Oberfläche und/oder durch Einstellung des angelegten Potentials als Stellgrößen erfolgt.

8. Verfahren nach einem der vorhergehenden Ansprüche,
**dadurch gekennzeichnet, dass**
die Regelung einen PI - Regler und/oder einen Kalman - Filter verwendet.

## Claims

1. Method for electrochemical machining of workpieces, wherein at least one electrode is situated adjacent to a surface to be machined, and current pulses are generated in pulsed operation in order to ablate material from the workpiece,
wherein

   - before and/or at the beginning and/or during an electrochemical ablation, data of the current pulses are registered and analyzed in order to identify a starting phase or a transient phase comparable to a starting phase and/or to regulate the spacing of the electrode to the adjacent surface to be machined and/or the current flow during a starting phase or a transient phase comparable to a starting phase,

   **characterized in that**

   - the starting phase or the transient phase comparable to a starting phase is identified **in that** the maximum or average current strength per pulse rises over a series of successive pulses or the maximum or average voltage per pulse drops over a series of successive pulses,

   wherein

   - the closed-loop control comprises a linearization and decoupling of the manipulated variables, wherein the applied potential U is defined by

   $$U = v_2 \left( R + \frac{x}{\kappa A} \right) + \Delta U,$$

   and/or
   the feed V is defined by

   $$V = K v_2 - v_1,$$

   wherein R is the total resistance of the system, x is the spacing of the electrode from the surface to be machined, $\kappa$ represents the electrical conductivity, A represents the working surface of the electrode, $\Delta U$ represents the overvoltage, and $v_1$ and $v_2$ are virtual manipulated variables, wherein $v_1$ corresponds to the control variable of the spacing of the electrode from the surface to be machined, and $v_2$ corresponds to the control variable of the current strength.

2. Method according to claim 1,
   **characterized in that**
   the starting phase or the transient phase comparable to a starting phase is identified **in that** the oblation rate is not constant.

3. Method according to claim 1 or 2,
   **characterized in that**
   the current strength of a current pulse, particularly each current pulse, is determined, i.e. at a predetermined point in time of the current pulse, particularly in a time interval in the middle of the current pulse.

4. Method according to claim 3,
   **characterized in that**
   the current strengths of the current pulses are determined at differently applied voltages.

5. Method according to one of the previous claims,
   **characterized in that**
   material-specific and/or system-specific parameters are determined from registered data of the current pulses.

6. Method according to one of the previous claims,
   **characterized in that**
   the material-specific and/or system-specific parameters comprise the overall electrical resistance of the system, the overvoltage and/or the conductivity.

7. method according to one of the previous claims,
   **characterized in that**
   the spacing of the electrode to the surface to be machined and/or the current flow is closed-loop controlled by setting the feed of the electrode in a direction of the surface to be machined and/or by setting the applied potential of manipulated variables.

8. Method according to one of the previous claims,
   **characterized in that**
   the closed-loop control uses a PI regulator and/or a Kalman filter.

## Revendications

1. Procédé de traitement électrochimique de pièces à usiner, dans lequel au moins une électrode est agencée au voisinage d'une surface à usiner et des impulsions de courant sont produites en service pulsé pour retirer du matériau de la pièce à usiner, dans lequel :

   - avant et/ou au début et/ou au cours du retrait électrochimique, des données de l'impulsion de courant sont saisies et évaluées pour identifier une phase de démarrage et/ou une phase turbulente comparable à une phase de démarrage et/ou, au cours d'une phase de démarrage ou d'une phase turbulente comparable une phase de démarrage, régler la distance de l'électrode à la surface à usiner et/ou le flux de courant,

**caractérisé en ce que** :

- la phase de démarrage ou la phase turbulente comparable à la phase de démarrage est identifiée du fait que l'intensité maximale ou moyenne du courant augmente par impulsion sur une série d'impulsions se suivant l'une l'autre ou la tension maximale ou moyenne diminue par impulsion sur une série d'impulsions se suivant l'une l'autre,

dans lequel:

- le réglage comprend une linéarisation et un découplage des grandeurs de réglage, dans lequel le potentiel appliqué U est déterminé par la formule :

$$U = v_2 (R + \frac{x}{\kappa A}) + \Delta U$$

et/ou
l'avance V par la formule:

$$V = \kappa v_2 - v_1,$$

dans laquelle R est la résistance totale du système, x la distance de l'électrode la surface à usiner, $\kappa$ la conductivité électrique, A la surface de travail de l'électrode, $\Delta U$ la surtension et $v_1$ et $v_2$ des grandeurs de réglage virtuelles, où $v_1$ correspond à la grandeur de réglage de la distance de l'électrode la surface à traiter et $v_2$ à la grandeur de réglage de l'intensité du courant.

2. Procédé selon la revendication 1,

   **caractérisé en ce que** :

   la phase de démarrage ou une phase turbulente comparable à une phase de démarrage est identifiée du fait que le taux de retrait n'est pas constant.

3. Procédé selon la revendication 1 ou 2,

**caractérisé en ce que** :

l'intensité d'une impulsion de courant, en particulier chaque impulsion de courant est déterminée et ce, à un moment prédéterminé de l'impulsion de courant, en particulier dans un intervalle de temps au centre de l'impulsion de courant.

4. Procédé selon la revendication 1,

   **caractérisé en ce que** :

   les intensités de courant des Impulsions de courant sont déterminées à des tensions différemment appliquées.

5. Procédé selon l'une quelconque des revendications précédentes,

   **caractérisé en ce que** :

   à partir des données saisies des impulsions de courant, on détermine des paramètres spécifiques au matériau et/ou spécifiques au système.

6. Procédé selon l'une quelconque des revendications précédentes,

   **caractérisé en ce que** :

   les paramètres spécifiques au matériau et/ou spécifiques au système comprennent la résistance électrique totale du système, la surtension et/ou la conductivité.

7. Procédé selon l'une quelconque des revendications précédentes,

   **caractérisé en ce que** :

   le réglage de la distance de l'électrode la surface à usiner et/ou du flux de courant se fait par réglage de l'avance de l'électrode dans la direction de la surface à usiner et/ou par réglage du potentiel appliqué comme grandeurs de réglage.

8. Procédé selon l'une quelconque des revendications précédentes,

   **caractérisé en ce que** ;

   le réglage utilise un régulateur PI et/ou un filtre de Kalman.

Fig. 1

(a)

(b)

(c)

Fig. 2

Fig. 3

Fig. 4

Führungsgrößen:
Spalt xSoll
Strom ISoll

Stellgröße:
Vorschub V
Spannung U

Regelgrößen:
Spalt x
Strom I

PI-Regler
E/A-Linearisierung

Regler

2

Strecke

1

Spaltschätzung

3

Kalman Filter

Beobachter

**Fig. 5**

Fig. 6

Virtuelle
Stellgrößen
v1, v2

E/A-Linearisierung

Stellgrößen:
Vorschub V
Spannung U

Strecke

$$U = v_2(R + \frac{x}{\kappa A}) + \Delta U$$

$$V = kv_2 - v_1$$

$$\dot{x} = k\frac{U - \Delta U}{R + \frac{\alpha}{\kappa A}} - V$$

$$y_1 = x$$

$$y_2 = I = \frac{U - \Delta U}{R + \frac{x}{\kappa A}}$$

Lineares E/A-Verhalten und
Entkopplung

**Fig. 7**

Stellgrößen:
Vorschub V
Spannung U

Spaltschätzungen

Messgrößen:
Strom I

Kalman Filter

Beobachter

**Prädiktion des Spalts mit Streckenmodell:**

$$\dot{\hat{x}}^- = k\frac{U-\Delta U}{R+\dfrac{\hat{x}^-}{\kappa A}} - V$$

**Korrektur der Prädiktion mit Messung:**

$$\hat{x}^+ = \hat{x}^- + L(I-\hat{I}) = \hat{x}^- + L\left(I - \frac{U-\Delta U}{R+\dfrac{\hat{x}^-}{\kappa A}}\right)$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0311799498 A1
- WO 03099499 A1

- US 2002169516 A1